# EUROPEAN PATENT APPLICATION

(11) **EP 4 197 862 A1**
(43) Date of publication of application: **21.06.2023**
(21) Application number: 21215327.4
(22) Date of filing: 16.12.2021
(51) Int. Cl.: B60R 13/08, G10K 11/165

(54) **PARTICLE ACOUSTIC DAMPER POUCH**

(71) Applicant: Autoneum Management AG, 8406 Winterthur (CH)
(72) Inventor: Epinat, Chloé, Zürich (CH)

(57) **Abstract**

A particle acoustic damper for locally damping vibration of a vehicle panels and reduce noise radiated by them comprising a pouch sealed to provide an enclosure and loose particles forming a filler inside the enclosure, characterised in that the pouch comprises of at least one layer of a spun bond fiber web

## Description

### Technical Field

The invention is directed to a particle acoustic damper, a way of producing such a particle acoustic damper and automotive trim part with a particle acoustic damper.

### Background Art

The sources of noise in a vehicle are many and include, among others, powertrain, driveline, tires (excited by the road surface), brakes, and wind. The noise generated by powertrain and tires, in particular, may cover a rather large frequency range that, for normal diesel and petrol vehicles as well as for vehicles equipped with an electric drive unit, can go from 100Hz up to 10kHz.

Generally, low frequency noise can be considered to cover the frequency range from 100Hz to 600Hz. It is dominated by so-called 'structure-borne' noise: vibration is transmitted by a source (e.g. the powertrain or the tires) to the panels surrounding the passenger compartment via a variety of structural paths and such panels then radiate noise into the passenger compartment itself. While on the other hand, generally mid-high frequency noise can be considered to cover the frequency range between 600Hz and 10kHz. It is dominated by 'airborne-noise': in this case the vibration is transmitted by a source (e.g. the powertrain or the tires) to the panels surrounding the passenger compartment via sound waves and such panels then radiate noise into the passenger compartment itself. For passenger comfort, it is necessary, that a sufficiently low interior noise level is obtained both at low and at mid-high frequencies.

For the attenuation of airborne mid-high frequency noise in vehicles, the use of noise attenuating trim parts, such as inner dash systems or floor carpet systems is known.

Generally, noise attenuating trim parts can effectively reduce mid-high frequency airborne noise thanks to their acoustic insulation and/or absorption properties. Acoustic insulation refers to the capability of a part to reflect the acoustic energy radiated by a source and impinging on it, while acoustic absorption refers to the capability of a part to dissipate the acoustic energy radiated by a source and impinging on it.

The acoustic insulation and absorption properties of a noise attenuating trim part generally derive from the materials comprised in it and from their arrangement in the part itself. In particular, to obtain good mid-high frequency insulation and/or absorption properties, the part may advantageously comprise a material layer consisting of a low-density porous material and arranged on the side of the part facing the vehicle body. This layer is placed in contact with the vehicle body, when the part is installed in the vehicle. This layer may consist of a low-density fibrous material or foam. Additional layers may be needed to obtain the desired noise attenuation in the mid-high frequency range. However, noise attenuating trim parts belonging to the state of the art are generally unable to effectively attenuate low-frequency structure-borne noise.

For this reason, traditionally, damping pads comprising polymeric viscoelastic materials (for example bitumen-based materials) are used for the attenuation of low-frequency structure-borne noise. These damping pads are laminated onto the vehicle body. They are generally very effective in reducing low-frequency structure-borne noise, thanks to their vibration damping properties.

Vibration damping refers to the capability of a part to reduce the vibrations of the structure on which it is applied (e.g. the body-in-white forming the vehicle body).

However, viscoelastic damping pads are very poor in attenuating noise in the range of mid and high frequencies. Therefore, in the state of the art in order to achieve a satisfactory noise attenuation over the full frequency range there is generally the need to combine two different types of parts, namely noise attenuating trim parts for the mid-high frequencies and vibration damping pads for the low frequencies.

This adds complexity and cost to the vehicle assembly process. In particular, damping pads, in order to damp the vibrations of the vehicle body, must be laminated onto it, i.e. they must adhere very strongly to the vehicle body. For this reason, damping pads are generally first manually positioned on the vehicle body along the vehicle assembly line, then cured and laminated to the body under heat. Alternatively, damping material may be directly sprayed onto the vehicle body in pre-defined areas. Both these processes are complicated, time consuming and require important investments, thus increasing the complexity of the vehicle assembly process and the production cost of the vehicle. Furthermore, they slow down the assembly process of the vehicle. On the other hand, noise attenuating trim parts may be installed in a vehicle in an easy way, simply by lying them onto the vehicle body along the assembly line.

In addition, the materials generally used for the production of vibration damping pads may pose performance problems in relation to their use in the automotive industry. In order to reduce the vehicle body vibrations, damping pads (or sprayed-on damping materials) used in the automotive field generally rely on the viscoelastic properties of the materials they comprise (e.g. bitumen-based materials), that may be very sensitive to temperature. As a consequence, damping pads may perform well only over a narrow temperature range. The temperature of a vehicle body may however vary over a very wide range, from below -30 degrees Celsius to above +80 degrees Celsius. Furthermore, traditional damping materials such as bitumen based materials tend to age and get brittle and lose damping performance during the vehicle lifetime.

Particle impact dampers known in the art employ particles made of a particulate material enclosed inside a cavity, which could be part of an existing structure or could be incorporated into impact sensitive devices. They are used to reduce vibrational stress and the material fatigue related to it. Versions of this type of particle impact dampers are placed for instance on building pillars in earthquake regions, or on the motherboards in computers. This type of particle impact dampers are disclosed either as filled cavities in a rigid plate structure, or as filled rigid containers, for instance metal cans.

Although it cannot be excluded that these solutions might be used to also dampen noise in a vehicle, they are either too large and or too heavy to be easily integrated into a vehicle.

Vibrational hot spots may occur over the main vehicle flooring panels, underneath the flooring trim system, at the fire wall panel behind the inner dash trim part or underneath the trunk coverage and they are interfering with the balanced noise management placed in the car, managed by soft trim parts having noise absorbing and/or insulating properties. The space available is restricted by the thickness of the parts and putting in stiff containers would degrade the overall performance of these parts. The alternative of using plates with particle-filled cavities may increase the weight of the car as well as the space needed, and is not a valuable proposition. Furthermore using stiff plates or containers would interfere with other properties needed of the soft trim parts used. For instance the treading performance, when one steps into the car, would be compromised by a stiff container or plate.

Attempts to make particle acoustic dampers with other structures failed due to breakage of the container and or leakage of the very fine particles, not only impairing the damping function but also soiling the surrounding area.

It is therefore the goal to provide a particle acoustic damper that is able to overcome the problems of the state of the art systems known, in particular that is able to reduce vibration at local hot spots, and may be used alone or integrated into trim parts, in a vehicle.

### Summary of invention

A particle acoustic damper for locally damping vibration of vehicle panels and reducing noise radiated by them comprising a pouch sealed to provide an enclosure and loose particles forming a filler inside the enclosure, characterised in that the pouch comprises of at least one layer of a spunbond polyolefin fiber web.

Surprisingly, a particle acoustic damper in the form of a pouch made of a spun bond fiber web enables a good conformity with the adjacent surface it is placed upon, thereby transferring the vibrational energy of the adjacent surface to the loose particles, while being strong enough to keep the particles enclosed and to withstand any compressional force or abrasion.

Enclosure is defined in the sense of a closed space surrounded by the material of the pouch. Pouch may be defined as a bag or a soft pouch.

Preferably, the pouch is made of a single layer of the fiber web material folded on itself and sealed around the rim to form a closed flange. Alternatively, the pouch can be made of 2 layers of the fiber web material, whereby at least one layer is draped to form a cavity to contain the filler and the second layer is laid on top and laminated or glued to the other layer on the areas of contact.

Preferably, the loose particles are not getting into contact with the adhesive used or are staying clear from the areas of the fibrous webs to be connected. Before or after closing the pouch, the pouches may be separated from the main fiber web stock, by cutting or punching. The shape the pouch is cut out in may be any basic shape like round, oval or a shape with at least 3 corners, preferably a shape with 3 to 8 corners. Cornered shapes like hexagonal or honeycomb shapes have the advantage of cutting waste, while round or oval shapes are better in keeping a 3-dimensional pouch shape, like a cushion.

As the fibre web material is water repellent and watertight at the same time, water cannot penetrate and interfere with the loose particles. At the same time the pouch is soft enough to adjust to the adjacent surface and guarantee an optimal connection to pass on the vibrations of the adjacent surface to the loose particles inside the pouch, thereby attenuating the vibrational noise.

Preferably, the polyolefin fiber web is made of polyethylene, preferably a high density polyethylene (HDPE), more preferably a flash-spun plexifilamentary HDPE fiber web.

The term "plexifilament" as used herein means a three-dimensional integral network or web of a multitude of thin, ribbon-like, film-fibril elements of random length. Typically, these have a mean film thickness of less than about 4 micrometers and a median fibril width of less than about 25 micrometers. The average film-fibril cross sectional area if mathematically converted to a circular area would yield an effective diameter between about 1 micrometer and about 25 micrometers. In plexifilamentary structures, the film-fibril elements intermittently unite and separate at irregular intervals in various places throughout the length, width and thickness of the structure to form a continuous three-dimensional network.

Nonwoven sheets made from plexifilamentary strands of polyethylene film fibrils are known. Blades et al, United States Patent 3,081,519, discloses, flash spinning of plexifilamentary strands of polyethylene film fibrils. Steuber, United States Patent 3,169,899, discloses depositing such strands onto a moving receiver to form a nonwoven sheet. Methods of assembling strands deposited from a plurality of positions are disclosed by Knee, United States Patent 3,402,227. Improved methods for depositing flash-spun plexifilamentary strands and forming them into sheets are disclosed by Pollock et al, United States Patent 3,497,918. Bonded sheets are disclosed by David, United States Patent 3,532,589.

One example of a flash-spun polyethylene plexifilamentary fiber web according to the invention may be a commercial available sheet material sold as TYVEK^{®} spunbonded olefin sheet material by E. I. du Pont de Nemours and Company of Wilmington, Del. ("DuPont"). TYVEK^{®} sheets, are made from flash-spun polyethylene that has been thermal bonded to form lightweight sheets which is a preferred solution. TYVEK^{®} sheet material is made from high density polyethylene. Tyvek as commonly on the market has a paper rather than a fabric-like appearance and consistency.

As a vehicle might be exposed to large temperature changes, standing in cold weather while driving with a heater on, or standing in full sunlight, any air trapped within the enclosure of a closed material would contract or expand depending on the temperature and or atmospheric pressure. In particularly with expansion, any sealing might be broken and the particles spilled, eliminating any damping effect in the event. The other way round contracting air might prevent any of the particles from moving due to the reduction of the space within the enclosure.

Surprisingly, the spunbond fiber web, preferably a HDPE spunbond fiber web, according to the invention is not only able to balance the pressure due to the breathable material properties, it was also found that the material bounces back to its original shape taking in air and guaranteeing enough space to have the full advantage of the particles as a damper. In addition as the material is still pliable it is able to adapt to small surface imperfections of the vehicle floor to transfer the floor vibrations to the loose particles.

Although the material is breathable, the micro perforations within the fibrous material are not only small enough to prevent particles from leaking but the material is also strong enough to resist any penetration of particles initially lodging into the fibrous material. Comparable standard nonwoven materials even if they would be close enough to keep the majority of the particles initially, would obtain holes over a period of time related to lodging particles slowly ripping small holes in the structure.

Preferably, the fiber web may have an area weight between 30 and 250 g/m², preferably between 40 and 200 g/m².

The thickness of the fiber web is preferably between 10µm and 1mm, preferably between 40µm and 500µm, most preferably between 50µm and 200µm. Due to the production process of the spunbond fiber web, the thickness may be varying substantially within the range given.

Spunbond materials may be partially or point bonded or fully bonded. Preferably, the fully bonded material is used, to prevent any delamination of the web or lodging or hanging of particles within the fibre web structure.

Surprisingly, an acoustic particle damper pouch made with the spunbond fibre web according to the invention may be compressed but will return to its initial shape. This may be used in the advantage of the particle acoustic damper pouch. By draping during the production at least one side of the pouch into a bowl like shape it is possible to create a 3 dimensional enclosure that is more beneficial for the free flowing of the particles during the vibrational damping. Preferably, both sides are bowl shaped to increase the 3 dimensional space within the pouch. Preferably, the shape may be a round or oval sphere or a pyramid sphere. While all type of particle acoustic damper shapes are feasible, at least one area of the outer surface must be able to form a surface contact with the adjacent surface of the material to be dampened. The combination of the fiber web pouch with the heavy weight loose particle filler, guarantees a good working particle acoustic damper. Preferably the side in contact with the surface to dampen is underneath the pouch at least partly so gravitation may improve the overall contact.

### Particle filler

For a good noise damping, preferably loose particles with a material density of at least 1500Kg/m³ are used.

The loose particles are preferably made from a material with a high material density, preferably at least 1500 kg/m³, preferably above 3000 kg/m³. The material might be at least one of a metal, preferably steel, zinc, nickel or iron, or a metal alloy or a mixture of high density materials. The material used might be treated to prevent deterioration during use inside the pouch as a particle acoustic damper.

The particles need to be loose within the pouch or enclosure. Preferably the loose particles are in the form of a powder, metal balls or irregular metal clusters or nuggets. The particles may have random shapes and sizes within the average size range. Irregular shapes and sizes may improve the overall noise reduction and frequency bandwidth.

In the noise attenuating trim part according to the invention, a vibration damping effect at low frequencies, i.e. between 100Hz and 600Hz, may be achieved thanks to the fact that the vibrational energy of the vehicle body is transmitted to the loose particles inside the pouch, which dissipate it, through friction and/or inelastic collisions.

The frequency range over which the loose particles in the pouch are most effective in dissipating vibrational energy by friction and inelastic collisions may be tuned by suitably choosing the statistical distribution of their particle size.

The 'particle size' when referred to an individual particle, is defined as its area equivalent circular diameter, measured according to the current ISO 13322-2. The particles in one pouch may have different particle sizes. From the particle size of the individual particles measured according to the current ISO 13322-2, the statistical distribution of the particle size of the particles in a pouch may be deduced, for example following the indications of the current version of ISO 9672-2.

In what follows, the term 'particle size', when referred to the ensemble of the particles inside the pouch, shall be understood as referring to the median D₅₀ of the statistical distribution of the particle size of the particles in the pouch.

Furthermore, the term "particle size distribution span" or "distribution span ", when referred to the ensemble of the particles inside the pouch, shall be understood as referring to the quantity S calculated from the formula S = (D₉₀ - D₁₀)/D₅₀, where D₁₀ is the 10^{th}-percentile-size and D₉₀ is the 90^{th}-percentile size calculated from the particle size statistical distribution. The particle size distribution span is a measure of how dispersed the particle size statistical distribution is around the median D₅₀.

Preferably, the particles in the pouch have a median particle size between 50µm and 1250µm, preferably between 150µm and 1000µm , preferably between 200µm and 700µm.

Preferably, the particles in the pouch have a particle size distribution span lower than or equal to 2.5, preferably lower than or equal to 1.5, preferably lower than or equal to 1.

An automotive trim part with an integrated particle acoustic damper might comprise more than one pouch.

In a vehicle panel, for example a floor panel, the frequency content of the vibration of different areas may be different. Some areas may vibrate predominantly at lower frequencies, e.g. below 250Hz, and some other areas may vibrate predominantly at higher frequencies, e.g. above 250Hz. For some areas, the vibration may be more broadband, for some other areas it may be more concentrated on a restricted frequency range.

Surprisingly, the acoustic particle damper pouch is able to dampen the vibration at the area of contact, and it is particularly effective in the frequency ranges where this vibration shows very high levels (i.e. peaks), in particular if these peaks are in the low and middle frequency ranges up to 900Hz. Hotspots with a high level of vibration (peak) in a specific annoying frequency can thus be treated by placing a pouch according to the invention on the vibrating spot.

In a preferred embodiment, a sheet with multiple discrete pouches each filled with loose particles may be used to dampen a larger area over a broader range of frequencies.

Preferably, the total weight of the particles in one pouch is between 5 and 100 grams, preferably between 8 and 70 grams, preferably between 10 and 60 grams.

Surprisingly, already with these low weights per pouch an effective reduction of the low-frequency structure-borne vibrations of the vehicle body can be achieved. Even more surprisingly classical damper pads adhered to a vehicle panel, with the same weight as an acoustic particle damper pouch according to the invention show less noise reduction as the particle damper pouch. A comparison of 3 particle damper pouches with 50gr each vs 3 patches of a classical bitumen damper with 50gr each placed on the same 3 spots showed a reduction of the noise of 2 db for the pouches vs 1.2 db for the classical damper, a increase of 0.8db over the classical damper. Hence particle dampers are able to replace classical dampers with a reduction of weight. Furthermore the acoustic particle damper pouch according to the invention is easier to recycle, as the separation of the spunbond fiber web and the particles is possible and both material may be reused or can be recycled again.

To further reduce the volume of the pouch as well as to increase the damping performance preferably particles with a high material density are taken, preferably at least above 1500kg/m³, preferably above 3000kg/m³.

The particle acoustic damper according to the invention works best when placed on a horizontal or sloping surface up to a 90°vertical surface. Preferably, the shape of the pouch is adapted to the slope of the contacting surface as well as its shape, to optimise the surface in contact on one side with the vibrating surface and on the opposing side with at least part of the loose particles.

Preferably, the pouch is closed, sealed and/or laminated with an adhesive, preferably using an adhesive that keeps the laminated edge flexible. Preferably a thermal or pressure activated adhesive is used, preferably an adhesive based on acrylamide, polyurethane, acrylate, epoxy, polyamide, ethylene vinyl acetate, or a branched polyethylene is used. More preferably a polyurethane or polyamide based adhesive is used.

The glue might be provided as a coating on the fibre web and activated during the forming of the pouch, or applied during production of the pouches. For instance a thermal or pressure sensitive glue film layer might be used.

The pouch production might be in a 2 step process whereby in a first step a first layer of the fibre web according to the invention is draped on a tray with one or more cavities, the fibre web might be, optionally thermally, formed by draping it to the wall of each cavity. A predefined weight or volume of loose particles is filled in each cavity on top of the first fibre web. A second fibre web is used to cover the filled cavities. The two fiber webs are laminated to each other along the rim of the cavity to form the particle filled enclosures. During or after lamination the pouches may be separated by a cutting blade or punch to create the damping pouches.

The material may be cut in different shapes to optimise the final surface to be in contact with the vibrating plate. Alternatively, a pouch might be produced by folding the fiber web in pouch shape and laminating the contacting surfaces, keeping the enclosed area open for filling. Filling and final closing the pouch by sealing the opening. The whole process might be done in a continuous forming, filling and closing process.

Alternatively, the pouches are integrated in a large strip or sheet, so that placing the damping pouches in the mould for creating an automotive trim part with integrated damping pouches in predefined areas is optimised.

For instance single pouches, a strip with multiple pouches, preferably spaced apart or with a sheet with multiple pouches randomly or purposefully placed over the surface of the sheet may be placed inside a mould and combined with either a foam layer or a felt layer, preferably with an injected foam layer, and laminated or material connected with at least one surface of the adjacent layer.

The damping pouches might be placed or glued on vibrational hot spots in a vehicle both in the interior or exterior of the car, for instance around engines, gearing, on or inside the battery box, on outer or inner dash area, on the floor, in the trunk or on the headliner as a stand alone version. As the pouches are considerably small, they may be integrated directly in new trim parts or may be added later optionally as stand-alone solution to reduce unexpected vibrational hot spots.

Alternatively the pouches may be mechanically or materially connected to an automotive trim part such that at least one surface is able to contact a surface of a vibrating vehicle panel preferably on a vibrational hot spot.

Preferably, only a small area of the pouch is attached to the trim part leaving the pouch hanging so that it can lay freely onto the vibrating surface, whereby the gravitational force on the particles will aid the contact between the pouch and the surface.

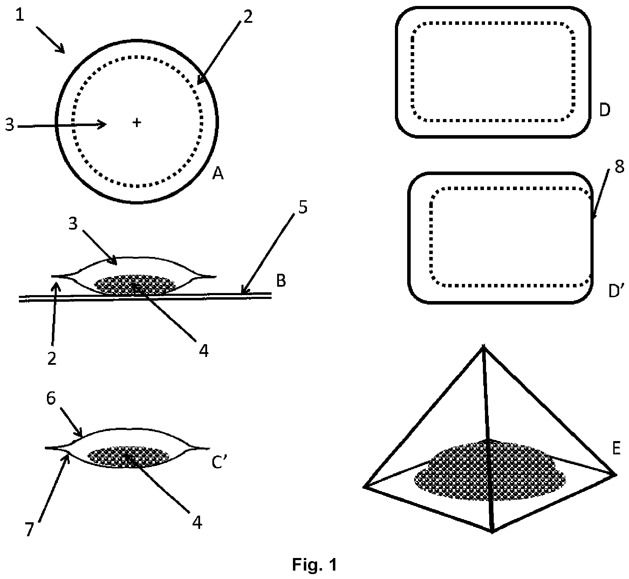

In one embodiment the pouch may have a pyramid (figure 1E) or similar shape whereby the tip of the pyramid might be integrated into the surrounding material and pinched to hold on to it, for instance by in mould foaming. The tip might be bent and captured by the foam and function as a hanging hook for the pouch.

Preferably, the noise attenuating trim part according to the invention comprises several acoustic particle damper pouches. The number of particle acoustic damper pouches is defined on the basis of the desired damping performance and on the basis of weight, space and cost constraints. Increasing the number of particle acoustic dampers leads to a higher performance but also to a higher weight, cost and production process complexity.

Preferably, the trim part according to the invention may include up to 30 particle acoustic damper pouches, preferably between 4 and 30 particle acoustic damper pouches, more preferably between 8 and 20 particle acoustic damper pouches.

Surprisingly, since the particle acoustic dampers have not more than 100 gr of filling each, overall a much lower weight is needed to obtain a satisfactory damping effect in comparison to the state of the art dampers used to dampen the same surface, thus reducing the weight of a car and hence the car energy consumption.

By integrating the particle acoustic dampers in the trim part, their positions can be pre-defined and during installation of the trim part the correct positions of the particle acoustic dampers are ensured. The particle acoustic dampers are preferably placed where the body vibrates the most, at so-called 'vibration hot-spots'. Such vibration hot-spots can be identified with experimental and/or simulation techniques well-known in the art. On a body panel there may be several vibration hot-spots and they may concern different frequency ranges. The weight of loose particles in the single particle acoustic damper might be adapted to the intensity of the vibrations.

The noise attenuating trim part according to the invention is preferably installed on a predominantly horizontal vehicle body panel (e.g. a vehicle floor), but it may work also when installed on body panels with other orientations (e.g. a vehicle dash panel), provided that when the part is installed on the vehicle, the loose particles inside the container are, under their gravity load, at least partially in contact with the fiber web in the region where the fiber web is contacting the vibrating surface of the vehicle body.

The particle acoustic dampers embedded in the noise attenuating trim part according to the invention may all have the same characteristics in terms of size, shape, particles type and filling ratio or they may be different, in order to adapt to the vibration of the body panels the part is in contact with as well as to the shape of the vehicle body and or the trim part, when it is installed in the vehicle.

In the trim part according to the invention, the particle acoustic dampers partly filled with loose particles are embedded into at least one foam or felt layer.

The foam layer may be formed from any type of open cell foam, preferably the layer is made of polyurethane foam. Preferably, the foam has a density between 25kg/m³ and 120 Kg/m³, preferably between 35kg/m³ and 80 Kg/m³, preferably between 45kg/m³ and 70 kg/m³.

The felt layer may be a fibrous layer comprising fibers, such as staple fibers, and/or filaments and a thermoplastic binder material.

Any combination of reclaimed, recycled and or virgin fibers, manmade, inorganic and or natural fibers may be used.

For instance, the felt layer may comprise reclaimed fibers made of at least one material selected from the group consisting of cotton shoddy, synthetic shoddy, polyester shoddy, natural fibre shoddy and mixed synthetic fibre and natural fibre shoddy.

The shoddy type is defined by having at least 51% by weight of the referenced material included, 49% can be fibers from other sources. So for instance, shoddy polyester contains at least 51% by weight of polyester based fibres. Alternatively, the shoddy material can be a mixture of different synthetic and natural fibers, whereby not one type is prevailing.

Preferably the fibers or filaments are made of at least one material selected from the group consisting of polyamide (nylon) such as polyamide 6 or polyamide 66, polyester such as copolymers of polyester or polyethylene terephthalate (PET) or polybutylene terephthalate (PBT) or polytrimethylene terephthalate (PTT), polyolefin such as polypropylene or polyethylene such as copolymer of polyethylene and mineral fibers, preferably one of glass fibers or recycled glass fibers or basalt fibers or carbon fibers.

Preferably the felt layer comprises self-crimped fibers, preferably hollow self-crimped fibers.

The felt layer may comprise a thermoset binder, for instance a binder based on phenolic resin or epoxy resin, or a thermoplastic binder consisting of at least one of the materials selected from the group consisting of polyester such as polyethylene terephthalate (PET), copolymers of polyester, polyolefin such as polypropylene or polyethylene, polylactic acid (PLA) and polyamide such as polyamide 6 or polyamide 66.

Preferably the binder material is in the form of fibers, flakes or powder. More preferably the binder material is one of a mono-component fibre or bi-component fibre.

The thickness of the foam or felt layer comprising the particle acoustic dampers is generally not constant and it depends mainly on space restrictions in the vehicle. The thickness available may vary between 2mm and 100 mm, but in most cases the thickness varies between 5mm and 40 mm. Typical average thickness of the layer as part of a carpet or inner dash is normally between 10 and 30mm, e.g. in average about 20mm.

Preferably, the area weight of the felt or foam layer embedding the particle acoustic dampers is between 200gr/m² and 2000gr/m², preferably between 800gr/m² and 1600gr/m².

The automotive noise attenuating trim part according to the invention may comprise one or more additional layers, on the surface opposite the surface for contacting the vibrating panel of the vehicle. An additional layer can be at least one another porous layer, preferably a foam or felt chosen with the materials previously defined. In addition or alternatively, the additional layer may be one of a film, a high density material layer, known in the industry as heavy layer material, a thermoplastic elastomeric material with a high filler content, a decorative layer like a nonwoven or carpet layer, or any combinations of such layers.

Alternatively a scrim layer might be placed on the surface of the foam or felt layer in contact with the vibrating vehicle panel. The thickness of such a nonwoven or scrim layer should not introduce an elevation such that the contact surface of the pouch is no longer able to contact the vibrating surface of the vehicle.

In a preferred embodiment, the trim part according to the invention is a spring-mass system, formed by a low density soft decoupling layer and a high density closed heavy layer, whereby the particle acoustic dampers partly filled with loose particles are comprised in the foam or felt layer being the decoupler and whereby the decoupler is placed in contact with the vibrating body panel when the part is installed in the vehicle. Preferably, the mass layer or heavy layer has an area weight between 500g/m² and 6500g/m². Eventually the trim part may comprise further layers on top of the surface of the heavy layer like a stiffening layer and or a carpet layer for instance a nonwoven or tufted carpet. Such a part might be moulded to form for instance an inner dash trim part, outer dash trim part and or flooring part for a passenger compartment of a car or may be used in the front or rear trunk area.

Preferably the heavy layer comprises a thermoset plastic material selected from the group consisting of ethylene vinyl acetate (EVA) copolymer, polyester, polyethylene terephthalate, high density polyethylene, low density polyethylene, linear low density polyethylene, polypropylene, thermoplastic elastomer, thermoplastic rubber and polyvinyl chloride (PVC) or any combination of the foregoing. In addition, it may comprise an inorganic filler material up to 85% in weight to increase the density of the material.

In this embodiment, the trim part according to the invention may comprise also additional layers such as a covering scrim layer, an acoustic scrim layer, a decorative top layer, for instance a tufted or nonwoven carpet layer on top of the mass layer.

In this case, the trim part is able to attenuate noise at least based on insulation and damping, while by including an addition porous layer on top of the heavy layer would also include noise attenuation based on noise absorption.

Another preferred embodiment is a trim part comprising a foam or felt layer comprising the particle acoustic dampers according to the invention, and is further comprising at least one additional fibrous porous layer on top of the foam or felt layer comprising the particle acoustic dampers with an air flow resistance higher than that of the layer comprising the particle acoustic dampers, preferably between 500Ns.m⁻³ and 4000Ns.m⁻³, to obtain an increased noise absorption in addition to the damping properties.

Another preferred embodiment is a trim part comprising an open cell foam layer comprising the particle acoustic dampers according to the invention, and further comprising a second porous fibrous layer with an air flow resistance of between 500Ns.m⁻³ and 4000Ns.m⁻³ and an intermediate film or scrim layer between these two layers. In this embodiment, the open cell foam layer comprising the particle acoustic dampers according to the invention is in contact with the vehicle body when the part is installed in the car, while the porous fibrous layer is facing the passenger compartment. The presence of the intermediate film or scrim helps enhancing the insulation properties in mid-high frequencies of the trim part, while the top porous layer guarantees good absorption properties, always in mid-high frequencies.

With all these examples, a good damping and insulating and/or absorbing attenuation of noise may be achieved covering the frequency range between 100Hz and 10kHz.

The trim part according to the invention can be produced following methods known in the art.

By way of example, the production of the trim part according to the invention can take place following the steps hereafter described.

The pouch production might be in a 2 step process whereby in a first step a first layer of the fibre web according to the invention is draped on a tray with one or more cavities, the fibre web might be, optionally thermally, formed by draping it to the wall of each cavity. A predefined weight or volume of loose particles is filled in each cavity on top of the first fibre web. A second fibre web is used to cover the filled cavities. The two fiber webs are laminated to each other along the rim of the cavity to form the particle filled enclosures. During or after lamination the pouches may be separated by a cutting blade or punch to create the damping pouches. The material may be cut in different shapes to optimise the final surface to be in contact with the vibriating plate. Alternatively, a pouch might be produced by folding the fiber web in pouch shape and laminating the contacting surfaces, keeping the enclosed area open for filling. Filling and final closing the pouch by sealing the opening. The whole process might be done in a continuous forming, filling and closing process.

The bonding process may be executed using techniques well-known in the art, e.g. through gluing or thermo-bonding. The presence of the small flange around the edge of the remaining part of the cavity produced in the first step may facilitate the bonding process. The bonding is however possible even without this flange.

In a separate process, a trim part is produced comprising a felt or foam layer having a section of its outer surface partially facing the vehicle body when the part is installed on the vehicle and presenting, within this section of its outer surface, recesses with a shape that conforms to the shape of the particle acoustic dampers filled with loose particles produced in the steps previously described.

The trim part may have the recesses already formed during the moulding of the trim part or they may be cut out in a seperate step before or after moulding.

In an alternative process, the particle acoustic dampers are placed in the mould and the trim part is produced directly including the particle acoustic dampers, for instance using an in-moulding foaming process or an injected fibre process.

The trim part produced in this fourth step may have a three-dimensional complex shape, in order to adapt to the space available inside the passenger cabin.

This process may be carried out with standard production methods known in the art. For example, a barrier heavy layer may be initially shaped by vacuum-moulding and subsequently back-foamed, the back-foaming tool presenting protrusions that conform to the shape of the particle acoustic dampers. After this, additional layers may be added on top of the heavy layer like, for example, a porous felt or foam layer, or a needle-punch or a tufted carpet.

Eventually, in an additional step the particle acoustic dampers are embedded into the porous layer by inserting them into the recesses of the adjacent layer.

The insertion of the particle acoustic dampers into the recesses is preferably carried out in an automated way, but it can be carried out also manually.

The presence of the flange around the edge of the pouch may facilitate the insertion process because it may help avoid that the pouch sinks into the adjacent layer. However, a proper and accurate integration of the pouch into the trim part is possible also without this flange.

Preferably, the pouch is bonded to the adjacent layer embedding it, at least on a part of its external surface. This helps avoid that it falls out of the trim part during the production process or during the installation of the trim part on the vehicle.

However, bonding of the container to the trim part is not necessary in order to avoid that it falls out of the trim part. This effect can be obtained also in other ways, for example by shaping the container in a suitable way (e.g. barrel-shaped container, or container shaped like an inverted truncated pyramid) or by providing the container with some mechanical fixation element (e.g. thin external protrusions having the form of spines or hooks) or by a combination of at least partial bonding and a preferred shape.

Preferably the trim part according to the invention is an noise attenuating trim part for a battery lid or enclosure, an inner dash, an outer dash or a carpet system such as a tufted carpet, a needle punched carpet, a carpet with flocked surface, or a Dilour carpet and wherein the layer embedding the particle acoustic dampers partly filled with loose particles is the one facing the vibrating vehicle body panel, when the part is installed on the vehicle.

For instance in a floor system, hot spots may be identified during the vehicle design phase and pouches placed on these spots as stand alone solution or as part of the lower side of the trim part related to these hot spots. The pouches may be attached to these dedicated areas with for instance a glue. Alternatively, the pouches may be laminated to the part during the moulding of the lower layer or the full part or during the foaming of the lower attaching layer. So that the lower layer in contact with the pouches form dedicated void areas to prevent the pouches from being in a compressed position during use. Preferably, the pouches are integrated in a 2-layer fibre web with filled cavities such that the placement of the pouches in the right spots is easy and more economical.

Surprisingly, the 2-layer fibre web containing enclosures filled with loose particles on predefined position throughout the 2-layer web, has a beneficial effect on the decoupling function of the adjacent foam or felt layer, preventing this layer from lodging or sticking to the vehicle flooring. As the spun bond fiber web is still gas permeable, the adjacent layer is still able to exchange air during compression of the layer.

Further embodiments of the invention may be derived from the description also by combining the different embodiments and examples of the invention and may be also derived from the description of the embodiments shown in the figures. The figures are schematic and not necessarily in scale.

Preferably the particle acoustic damper according to the invention is integrated at least partly in at least one layer of an automotive trim part in such a way that at least one outer surface of the pouch can face and is in contact with a vibrating surface of the vehicle, and the surface opposite of the contact surface is in contact with at least a part of the loose particles inside the pouch. Preferably at least a small part of the pouch may stick outside of the automotive trim part. Surprisingly, the vibrational damping effect is on a larger area than the area the pouch is touching the vibrating surface. Already a measureable damping effect can be achieved with small pouches with particle filling of less than 100 gr each.

Surprisingly, the particle acoustic damper according to the invention can reduce the vibration at a vibrational hotspot comparable or even better than a traditional bitumen damper. This will reduce the need for larger damping patches to reduce local vibrational hotspots, while even in small spaces the pouch damper according to the invention might be placed while the classic damper is no longer applicable. Also retrofitting of single hotspots may be easier.

It could be shown that 3 damper pouches placed on 3 areas of a piece of metal car flooring of uneven structure could reduce up to 2db in the low frequency ranges. This was at around 0.8db more compared to 3 pieces of classic damper pads with the same weight and placed on the same points, showing that the particle acoustic dampers according to the invention outperform classical damping material. This being on top of the advantageous of not being temperature dependent and no need for full body contact to perform.

Furthermore, it could be established that the acoustic damping pouches according to the invention can reduce the peak frequency of the area in contact, hence a 2-layer spunbond fiber web with multiple smaller enclosure spaced apart or connected via laminated spunbond fiber web zones, would also work as a replacement for a classical damper. To obtain the same damping in the low frequency range a lower weight is needed, saving weight on single parts will ultimately reduce overall the CO₂ footprint of the car. The

### Brief description of drawings

Figure 1 A to E are giving some possible forms of damper pouches according to the invention.
Figure 1 A, B and C are showing an acoustic particle damper pouch (1) made of a first (7) and a second (6) layer of fibre web according to the invention. Figure 1A shows the view from the top, called footprint, while figure B and C show a cross section of the pouch 1. The area 2 is indicating the laminated or glued area that closes the pouch and creates an internal enclosure 3 that is filled with loose particles 4. The lower area of the pouch - here with the first layer 7 is preformed by draping to form a cavity for the loose particles. This preforming also creates a cushion like 3D shape that enables a better contact with the underlying panel 5.
Figure 1 B shows a stand alone version of a pouch on a vehicle panel 5. The contact surface between the pouch and the vehicle panel 5 is defined as the outer surface of the fibre web 7 that is the contact surface with the vibrating panel of the vehicle 5, the opposite surface of the fibre web is in contact at least part of the loose particles inside the pouch, so vibration energy of the vehicle panel can be transferred to the loose particles inside the pouch, where it is dissipated by the movement of the particles.

The remaining volume of the pouch not occupied by the particles is filled with air. Due to the ability of the fibre web to exchange air with the surrounding, any compression of the pouch will be followed by a decompression after a while, as the material, surprisingly, returns to its original state. Hence, the pouch will always maintain enough internal volume for the loose particles to move freely and unrestrained.

Figure 1 D and D' are showing an alternative shape with the laminated areas indicated with 2. In the case of figure 1D the material is folded on itself, with 8 showing the folding line. Figure 1 E Is an example of a pyramid type pouch, whereby the tip of the pyramid might be integrated into the adjacent layer to form a connection, even if the material of the pouch is pinched in this area to form the remaining volume of the enclosure is still enough for the particles to behave as a loose particle damper.

## Claims

1. A particle acoustic damper for locally damping vibration of vehicle panels and reducing noise radiated by them comprising a pouch sealed to provide an enclosure and loose particles forming a filler inside the enclosure, **characterised in that** the pouch comprises of at least one layer of a spunbond polyolefin fiber web.

2. A particle acoustic damper according to one of the preceding claims whereby the spunbond fiber web is made of a polyolefin, preferably a polyethylene, more preferably a high-density polyethylene, more preferably a flash spun plexifilamentary high-density polyethylene fiber web.

3. A particle acoustic damper according to one of the preceding claims whereby the fiber web is fully bonded, forming a paper-like material.

4. A particle acoustic damper according to one of the preceding claims further comprising a glue layer to laminate and/or seal the at least one fiber web at the rims into a closed pouch forming an enclosure for the filler particles.

5. A particle acoustic damper according to claim 5 whereby the glue layer is based on at least one of ethylene vinyl acetate, branched polyethylene, acrylate, epoxy, polyamide, and polyurethane.

6. A particle acoustic damper according to one of the preceding claim whereby the pouch is formed from 2 layers of spun bond polyolefin fiber web, whereby at least one of the layers forms a cavity with at least a volume of loose particles as filler, and the other layer covers the filled cavity and attaches to the surrounding rim to close the cavity.

7. A particle acoustic damper according to one of the preceding claims whereby the pouch is formed in either a sphere or a pyramid 3 dimensional shape, preferably with a footprint that is one of round, oval, or cornered shape with at least 3 corners, preferably with at least 3 up to 8 corners.

8. A particle acoustic damper according to one of the preceding claims whereby the loose particles are formed from a high density material, preferably a high density metal, preferably based on iron, nickel, zink or steel or metal alloy, or a mixture of high density materials.

9. A particle acoustic damper according to one of the preceding claims whereby the loose particles are formed by mixing particles based on different high density materials.

10. A particle acoustic damper according to claim 9, whereby the loose particles are from a recycled or reclaimed source.

11. A particle acoustic damper according to one of the preceding claims whereby the total weight of the particles in one pouch is less than 100 grams, preferably between 5 and 100 grams, preferably between 30 and 70 grams

12. Automotive noise attenuating trim part comprising at least one foam or felt layer **characterised in that** the layer comprises at least one particle acoustic damper according to one of the preceding claims, whereby the particle acoustic damper pouch comprises a contact surface for contacting a vibrating surface of the vehicle and whereby the surface opposite the contact surface is in contact with at least part of the loose particles, such that the fibres web can transfer vibrational energy from the vibrating surface to the loose particles inside the container and whereby the second outer surface is in contact or connected to the at least one foam or felt layer.

13. Automotive noise attenuating trim part according to claim 12, whereby the loose particles have a median particle size between 20µm and 1250µm, preferably between 250µm and 1000µm, preferably between 150µm and 900µm. .

14. Automotive noise attenuating trim part according to claim 12 to claim 13 with the at least one layer being a felt layer, whereby the felt layer comprises fibers and/or filaments, and is further comprising a thermoset or thermoplastic binder.

15. Automotive noise attenuating trim part according to at least one of claim 12 to 14, further comprising one or more additional layers on the surface of the foam or felt layer opposite the surface for contacting the vibrating surface of the vehicle.

16. Automotive noise attenuating trim part according to claim 15 whereby the at least one or more additional layers is at least one of a foam layer, or felt layer, a film layer, a foil layer, a thermoplastic elastomeric layer with a high filler content, a decorative layer, such as a nonwoven or carpet layer, or any combinations of such layers.

17. Use of the noise attenuating trim part including a particle acoustic damper according to any of claim 12 to 16, as an inner dash, an outer dash, a battery lid silencer, a battery insulator, as a carpet system with at least one of a tufted carpet, a needle-punch carpet, a carpet with flocked surface, or a Dilour carpet, as a trunk trim part or trim part for the engine bay area, wherein the at least one layer is the layer in contact with a vibrating body panel when the part is installed in the vehicle.
